# EUROPEAN PATENT SPECIFICATION

(11) **EP 1 680 934 B1**
(45) Date of publication and mention of the grant of the patent: **25.11.2009**
(21) Application number: 04795816.0
(22) Date of filing: 21.10.2004
(51) Int. Cl.: H04W 84/14, H04J 3/22, H04L 12/24, H04L 12/28, H04L 12/56, H04L 29/06

(54) **METHOD AND SYSTEM FOR REMOTELY MANAGING WIRELESS TRANSMIT/RECEIVE UNITS**
VERFAHREN UND SYSTEM ZUR FERNVERWALTUNG VON DRAHTLOSEN SENDE-/EMPFANGSEINHEITEN
PROCEDE ET SYSTEME VISANT A GERER A DISTANCE DES EMETTEURS RECEPTEURS SANS FIL

(30) Priority: 05.11.2003 US 517687 P; 01.07.2004 US 882569
(43) Date of publication of application: 19.07.2006
(60) Divisional application: 09158370.8
(73) Proprietor: INTERDIGITAL TECHNOLOGY CORPORATION, Wilmington, DE 19810 (US)
(72) Inventor: RAHMAN, Shamim, Akbar, Montreal, Québec H3H 2V1 (CA); HUNKELER, Teresa, Joanne, Montreal, Québec H4A 2V1 (CA); RUDOLF, Marian, Montreal, Québec H3J 2P3 (CA); DICK, Stephen, G., Nesconset, New York 11767 (US)
(74) Representative: Nordin, Magnus
(86) International application number: PCT/US2004/034706
(87) International publication number: WO 2005/048567

(56) References cited:
- WO-A-99/39488
- WO-A2-02/30057
- US-A1- 2002 120 699
- US-A1- 2004 128 114
- US-A1- 2005 058 062
- US-A1- 2005 073 979

## Description

FIELD OF INVENTION

The present invention is related to wireless communication systems. More particularly, the present invention is related to a method and system for providing remote access to wireless/transmit receive units so that network management functions may be efficiently communicated to and from WTRUs.

BACKGROUND

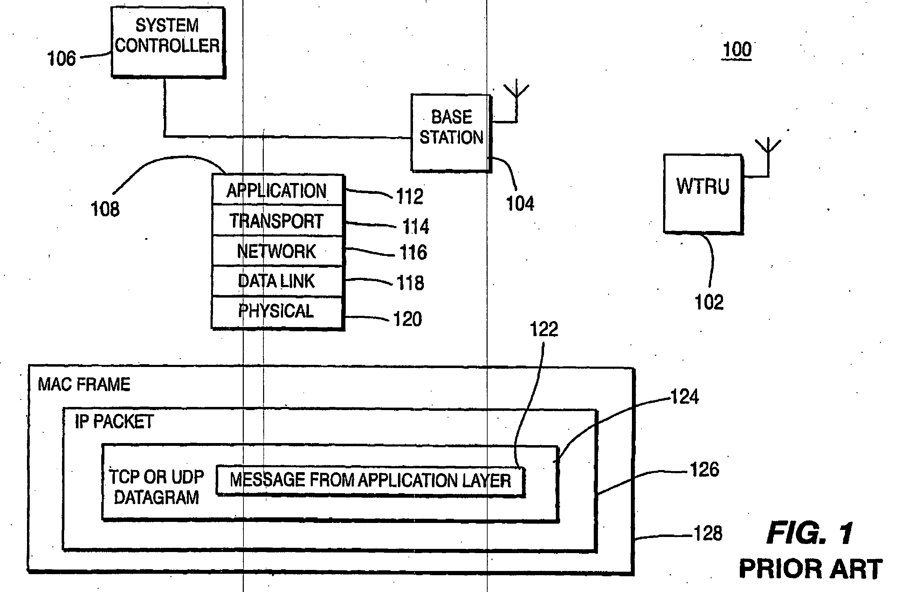

Referring initially to Figure 1, there is shown a conventional wireless communication system 100. The system 100 includes at least one wireless transmit/receive unit (WTRU) 102, at least base station 104, and at least one system controller 106 for controlling and otherwise managing communications within the system 100.

Typically, system functionality is decomposed into modules called layers to simplify and separate the tasks associated with data transmission. Therefore, for purposes of clarity, also shown in Figure 1 is a sample protocol stack 108. In protocol stack 108, the highest level is the application layer 112. The application layer 112 is the layer where processes of two entities communicate with each other. Below the application layer 112 is the transport layer 114, which provides for logical communication between two communicating entities so that, from the application's perspective, it is if the two entities are directly connected to each other. There are two dominant transport layer protocols; transmission control protocol (TCP) and user datagram protocol (UDP). Beneath the transport layer 114 is the network layer 116. The network layer 116 encapsulates datagrams from the transport layer 114 and encapsulates them in packets and routes them through a network to their respective destinations using the Internet Protocol (IP). Such packets are often referred to as IP packets. Below the network layer 116 are the data link layer 118 and the physical layer 120 where the task of moving IP packets between individual links is performed. The protocols implemented at the link layer 118 and physical layer 120 may vary depending on the type of link being crossed (e.g. wire or wireless). Herein, purely' for convenience, protocols implemented at the link layer 118 and physical layer 120 are collectively referred to as medium access control (MAC) messaging protocols. It is noted that the use of the term MAC messaging protocols is not limiting and may include all types of link layer channels including, but not limited to, broadcast and point-to-point channels.

A system controller 106 typically communicates with a base station 104 regarding network management functions using some type of application level network management protocol implemented at the application layer 112. Because the communications are carried out at the application layer 112, there is a fair amount of data exchanged between the controller 106 and base station 104 dedicated solely to management. Since communications between the system controller 106 and base station 104 are typically performed over a wired interface having plenty of bandwidth, communicating management functions at the application layer 112 is typically not a problem. Further, both entities typically both utilize and support the relevant application level protocol.

Communicating network management functions at the application layer 112, however, is often difficult or impossible to implement between a base station and a WTRU 102. As an initial matter, application level protocols tend to be relatively complex requiring functionality at each layer of the protocol stack 108 and significant amounts of data to be exchanged over the air. For example, where an application level network management protocol is used, each message 122 (also shown in Figure 1) is encapsulated with a TCP or UDP datagram 124, which is encapsulated within an IP packet 126 within a MAC frame 128. Therefore, communicating management functions to and from a WTRU using an application level network management protocol is a very inefficient use of bandwidth. Further, even where such inefficient use of bandwidth may be tolerable, WTRUs often do not implement application level software for performing network management functions thereby masking such communications impossible.

It would therefore be desirable to provide a method and system whereby network management junctions may be efficiently communicated to and from WTRUs.
WO 02/30057 discloses a communications system including a base station operable to communicate with a terminal unit over a wireless interface and a packet network coupled to the base station and operable to communicate with the base station. The system also includes a network management system coupled to the packet network. The network management system is also operable to transparently communicate the management message to the terminal unit and to transparently receive a response to the management message from the terminal unit.
WO 99/39488 discloses a communications system for mobile data transfer, comprising a communications network, an application module and a separate terminal module, where data is transferred between the network and the application module via the terminal module, which hides network dependent operations such as error control from the application module3

SUMMARY

The present invention is a method and a base station for providing intelligent remote access to wireless transmit/receive units (WTRUs) as claimed in claims 1 and 11.

BRIEF DESCRIPTION OF THE DRAWINGS

Figure 1 is a block diagram of a conventional wireless communication system, protocol stack, and encapsulated application layer message.

Figure 2 is a block diagram of a wireless communication system in accordance with the present invention.

Figure 3 its brock diagram of an 802.11 type wireless network.

Figure 4 is a block diagram of a base station, a VPTRU, and a network management station of the 802.11 type wireless network shown in Figure 3 wherein network management functions are communicated to and from a WTRU in accordance with the present invention.

Figure 5 is a flow diagram of a method wherein a system controller may obtain parameters from a WTRU in accordance with the present invention.

Figure 6 is a flow diagram of a method wherein a system controller may update or otherwise change parameters or a WTRU in accordance with the present invention.

DETAILED DESCRIPTION OF THE PREFERRED EMBODIMENTS

Herein, a base station includes, but is not limited to, a Node B, an access point, a site controller or other interfacing device in a wireless environment that provides WTRUs with wireless access to a network with which the base station is associated. Herein a WTRU includes, but is not limited to, a user equipment, a mobile station, a fixed or mobile subscriber unit, a pager, or any other type of device capable of operating in a wireless environment. WTRUs include personal communication devices, such as phones, video phones, and Internet ready phones that have network connections, and portable personal computing devices, such as PDAs and notebook computers with wireless modems that have similar network capabilities. Herein, a system controller includes a radio network controller (RNC), a network management station (NMS), or any other type of controller for performing system control features in a wireless communication system.

The use of MAC messaging protocols over an air interface between a base station and WTRU is much more efficient than using application level network management protocols, as described in the Background section. Further, the use of MAC messaging protocols is preferred because they utilize the data link and physical layers where the information of interest to the system controller is located. To explain further, the type of information related to the management of WTRUs that is of interest to a site controller includes WTRU performance, configuration, and fault reporting. For example, the performance parameters may include a received/transmitted packet error rate, the configuration parameters may include a WTRU's preferred service provider, and the fault reporting parameters may include a number of failed authentication attempts. Since these items are available at the data link and physical layers, the present invention uses MAC messaging protocols between base stations and WTRUs and application level network management protocols between the controllers and base stations. Further, a translator is provided in base stations so that the system controllers have direct access to the WTRUs.

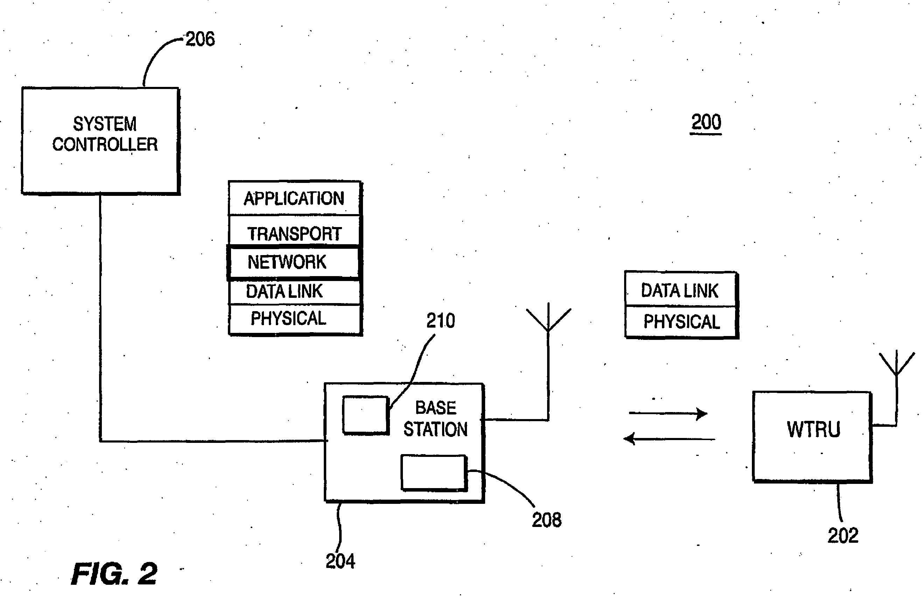

By way of example, referring now to Figure 2, there is shown a system 200 in accordance with the present invention. The system 200 includes at least one WTRU 202, at least one base station 204, and at least one system controller 206. In this embodiment, a translator 208 is provided at the base station 204. The translator 208 is configured to translate back and forth between application level network management protocols and MAC messaging protocols.

In one embodiment, when the WTRU 202 begins operating within a coverage area provided by the base station 204, the base station 204 uses a MAC message protocol to obtain (i.e. request and receive) the WTRU's 202 settings and/or parameters (hereinafter collectively referred to as "parameters"), which may include any information within the WTRU 202 that is relevant to network management. The parameters are translated by translator 208 from an MAC messaging protocol to an application level network management protocol and stored in a database 210 in the base station 204. The system controller 206 may then access the parameters of WTRU 202 as desired from the base station 204 using an application level network management protocol. The base station 204 is preferably configured to periodically query the WTRU 202 for its parameters to avoid having outdated data in its database 210.

In another embodiment, the system controller 206 may not only read the parameters of WTRU 202, but may also write to them as well. In thins embodiment, the system controller 206 may transmit updated parameters to the WTRU 202 by sending a message using an application level network management protocol to base station 204. Then, once the updated parameters are received by base station 204, the translator 208 translates them into a MAC messaging protocol format and forwards the translated parameters to WTRU 202. WTRU 202 then updates its parameters accordingly. The system controller 206 may also utilize this embodiment to send messages (via base station 204) to WTRU 202 instructing it to report back to the base station 204, who will forward the report to the system controller 206, when certain events occur.

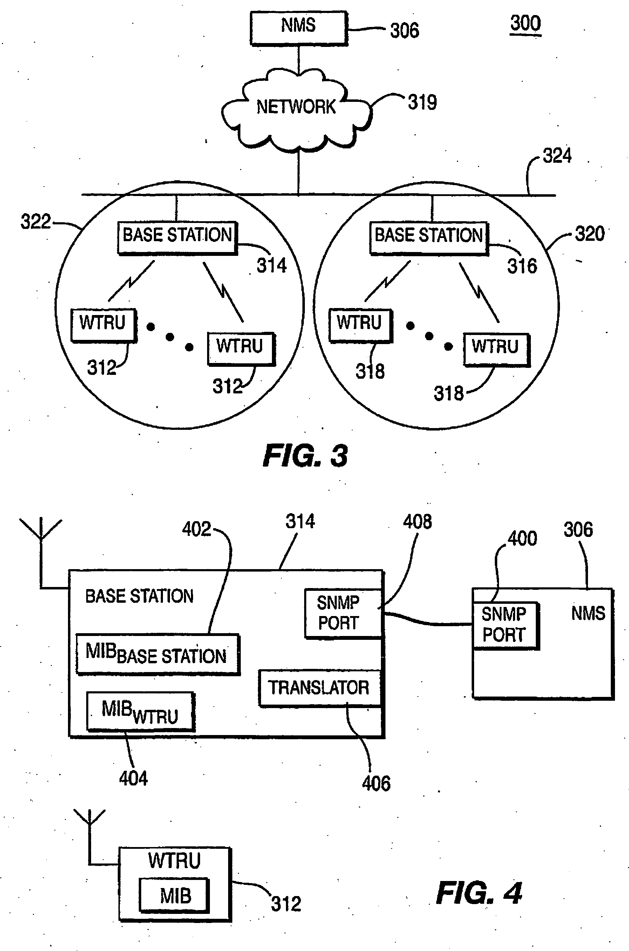

To provide a more specific example of how the present invention may be implemented in an 802.11 type network, reference is made to Figures 3 and 4. It is noted that while the network shown in Figure 3 is referred to as a "802.11 type network," the system may be any type of network in the 802 family of networks including but not limited to wireless local area networks (WLANs), wireless personal area networks (WPANs), wireless metropolitan area networks (WMANs), etc. In Figure 3, a schematic block diagram of a wireless network 300 is shown. The wireless network 300 comprises a network management station (NMS) 306, a plurality of base stations 314, 16, and a plurality of WTRUs 312, 318. WTRUs 312, 318 are grouped with there respective base stations 314, 316, These groupings are commonly referred to as basic service sets (BSSs) 320, 322. A plurality of BSSs 320, 322 are connected via a distribution system (DS) 324 wherein a plurality of BSSs are commonly referred to as an extended service set (ESS). The base stations 314, 316 are preferably connected to the NMS 306 over a network 319.

Referring now to Figure 4, a block diagram of a WTRU 312, a base station 314, and NMS 306 in network 300 of Figure 3 is shown. The NMS 306 communicates network management information to and from base station 314 using an application level network management protocol. Purely by way of example, the application level network management protocol shown in this embodiment is the simple network management protocol (SNMP), but any application level protocol, propriety or otherwise may be used. An example of another type of application level network management protocol that may be used is the extended markup language (XML) protocol.

The NMS 306 may transmit SNMP messages through an SNMP port 400. It is noted that with respect to the transport level, either TCP or UDP may be used as desired. The parameters that are of interest to an NMS 306 in an 802.11 type network are maintained in a management information base (MIB). Typically, in 802.11 type networks, base stations and WTRUs each maintain a MIB wherein their respective parameters are stored. For example, in the present invention, base station 314 includes a database 402 wherein a MIB is maintained for the base station itself (i.e. MIB_{base station}. Additionally, the base station 314 includes a database 404 wherein a MIB of all WTRUs associated with base station 314 are maintained (i.e. MIB_{WTRUs}). As explained above, base station 314 also includes a translator 406 for translating back and forth between SNMP and a MAC messaging protocol. In this embodiment, the MAC messaging protocol is preferably an 802.11k messaging protocol. The 802.11k messaging protocol is a data link layer/physical layer protocol communicating parameters of a WTRU 312 to a base station 314.

For the NMS 306 to obtain MIB information regarding a base station 314, the NMS 306 simply sends a request using SNMP (i.e. an SNMP Get message) and the base station 314 receives the request and responds as requested. Therefore, in the present invention, the base station 314 preferably periodically obtains the WTRU's 312 MIB using 802.11kmessaging and stores it in database 404 so that the WTRU MIBs are available in the base station 314. It is noted that the MIB may be translated to SNMP upon receipt by the base station 314 for storing in translated format or the MIB may be translated when an NMS 306 requests it. In either case, the MIB is transmitted to the NMS 306 in SNMP format. Further, in another embodiment, the base station 314 does not periodically obtain the WTRU MIBs and instead obtains WTRU's 312 MIB when the NMS 306 requests it.

To obtain the WTRU's 312 parameters, the NMS 306 requests the parameters using an SNMP message through its SNMP port 400. In SNMP, such a request may be referred to as a Get message, as indicated above. The base station 314 receives the request at its SNMP port 408 and provides the WTRU's 312 parameters to the NMS 306 in SNMP format. Where the MIBs are stored in database 404 in SNMP format, the MIB for WTRU 312 is simply transmitted to the NMS 306. Where the MIBs are stored in 802.11k messaging format, the MIB for WTRU 312 is translated by the translator 406 and then sent to the NMS 306. The MIBs are preferably provided from the base station 314 to the NMS 306 using the SNMP ports 408, 400. As noted above, if WTRU's 312 MIB is stale (i.e. has been in database 404 for over a predetermined amount of time), base station 314 will obtain a fresh MIB from WTRU 312.

In another embodiment of the present invention, the NMS 306 may send an SNMP message to base station 314 requesting that certain WTRU 312 traps are set whereby WTRU 312 will report when certain events happen. The NMS 306 sends an SNMP message (i.e. an SNMP Trap message) to a base station 314 for a particular WTRU 312. The base station 314 receives the SNMP message through the SNMP port 408. The translator 406 in the base station 314 translates the SNMP message into an 802.11k message. Then, the base station 314 transmits the 802.11k message to request the particular WTRU 312 report the trap condition to the base station 314 when the triggering event has occurred. Once the event actually occurs, the WTRU 312 sends an 802.11k message to the base station 314. The translator 406 of the base station 314 then translates the message into SNMP and sends it to the NMS 306.

As described herein, the NMS 306 can set MIB parameters of WTRU 312 by sending an SNMP message to a base station 314 wherein the base station translates the updated parameters to 802.11k and forwards the updated parameters to WTRU 312. However, the NMS 306 may, in certain circumstances, wish to interface directly with the WTRU 312. Therefore, in another embodiment, the NMS 306 is configured to transmit and receive SNMP messages to and from a WTRU SNMP agent so that the WTRU's 312 MIB parameters may be set via a standard SNMP (Set) message sent over the air. Even though this signaling is transmitted using SNMP messaging over the air, this is typically low volume signaling, and therefore the adverse effect is not substantial.

Further, the setting of WTRU 312 MIB configuration parameters using SNMP over the air may be optimized using the teachings of the present invention. For example, by setting parameters and/or certain triggers using the translator of the present invention, WTRUs may be configured to revert to certain default configurations based on certain events. More specifically, a WTRU 312 may be configured to revert to a default configuration when it returns to its home network, for example. This may be used to eliminate the need for low volume SNMP signaling altogether for purposes of setting WTRU parameters. Alternatively, the parameters may be set using the translator and a combination of application level and MAC level messaging, as described herein.

The base station 314 components described herein are preferably implemented on a single integrated circuit, such as an application specific integrated circuit (ASIC). However, the components may also be readily implemented on multiple separate integrated circuits.

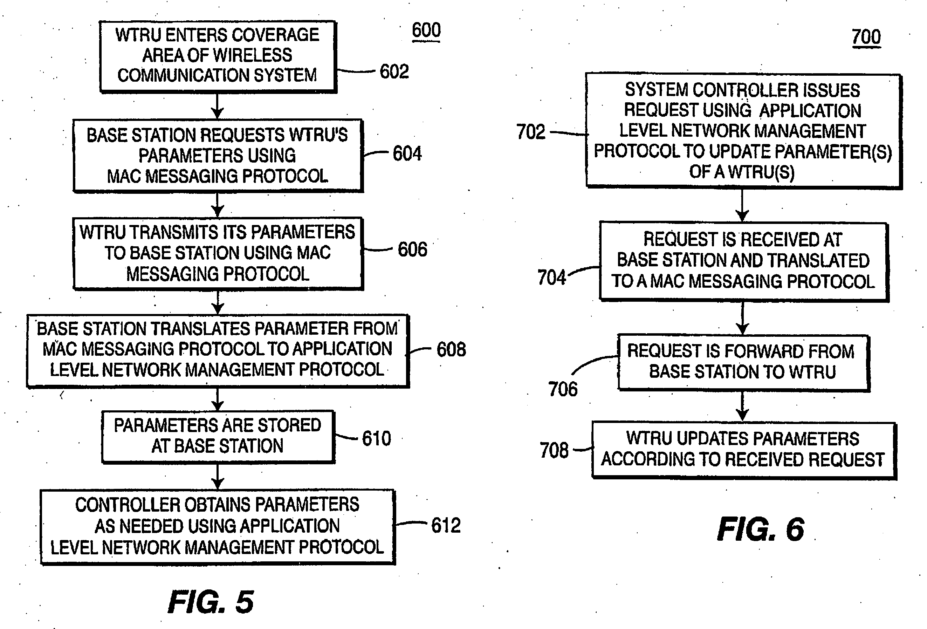

Referring now to Figure 5, there is shown a flow diagram of a method 600 wherein a system controller may obtain parameters from a WTRU. The method 600 begins in step 602 when a WTRU enters a coverage area of a wireless communication system. Then, in step 604, a base station associated with the WTRU requests the WTRU's parameters using a MAC messaging protocol. Next, in step 606, the WTRU transmits the parameters to the base station using a MAC messaging protocol. The base station translates the parameters from the MAC messaging protocol to an application level management protocol (step 608) and stores the translated parameters (step 610). The translated parameters are preferably stored in a database residing in or otherwise affiliated with the base station. As noted above, steps 604 to 610 may be repeated as necessary to maintain a fresh set of data. Once the translated parameters are stored at the base station, the controller may obtain them from the base station as needed using any type of application level network management protocol (step 612). It is noted that, in an additional embodiment, the translation step may be triggered once an actual request for parameters is received. In this case, the parameters are stored in MAC messaging format.

Referring now to Figure 6, there is shown a flow diagram of a method 700 wherein a system controller may update or otherwise change parameters of a WTRU. In this embodiment, the system controller has write access to the parameters of the WTRU. The method 700 begins in step 702 where a system controller issues a request using an application level network management protocol to update parameters of a WTRU(s). The updated parameters are preferably sent with the request. In step 704, the request is received at the base station and translated to MAC messaging protocol format. The base station then forwards the request to the WTRU in step 706. The WTRU then updates its parameters according to the request in step 708. Method 700 may also be used to set traps at WTRU where WTRUs perform certain actions when certain events occur, as explained above.

It is important to not that the present invention may be implemented in any type of wireless communication system. By way of example, the present invention may be implemented in UMTS-TDD, UMTS-FDD, CDMA2000, TDSCDMA, GSM, WLAN, WPAN, WAN or any other type of wireless communication system.
The scope of the present invention is defined by the appended claims.

## Claims

1. A method for communicating information between network entities in a wireless communication system comprising a base station, a system controller, and a wireless transmit/receive unit WTRU, the method comprising:
receiving, at the base station, network management information from the system controller using an application level network management protocol;
**characterized by**:
translating, at the base station, the network management information from the application level network management protocol to a medium access control MAC messaging protocol, the MAC messaging protocol being a protocol implemented at a link layer and at a physical layer,
transmitting the network management information between the base station and the WTRU using the MAC messaging protocol.

2. The method of claim 1 wherein the application level network management protocol is simple network management protocol SNMP.

3. The method of claim 2 wherein the system controller issues a SNMP Get message to obtain network management information from a WTRU.

4. The method of claim 3 wherein the base station responds to the system controller after fetching the requested network management information from a database in the base station wherein network management information for the WTRU is stored after being obtained by the base station from the WTRU using a MAC messaging protocol.

5. The method of claim 4 wherein the MAC messaging protocol is 802.11k.

6. The method of claim 2 wherein the system controller issues a SNMP Trap message to set at least one parameter of the WTRU.

7. The method of claim 6 wherein the base station translates the SNMP TRAP message to an 802.11k message and transmits the translated message to the WTRU.

8. The method of claim 2 further comprising transmitting an SNMP message from the system controller to an SNMP agent in the WTRU to set at least one parameter in the WTRU.

9. The method of claim 8 wherein based on the message, the WTRU is configured to automatically set the at least one parameter to a predetermined value when a predetermined event occurs.

10. The method of claim 1 wherein the application level network management protocol is extended markup language XML.

11. A base station (204) in a wireless communication network adapted to transmit network management information between a system controller (206) and a wireless transmit/receive unit WTRU (2002) said base station comprising:
a database (210) configured to store network management information.
said base station being **characterized in that** it further comprises:
a translator (208) configured to translate network management information received from the system controller in an application level network management protocol to a medium access control MAC messaging protocol, and to translate network management information received from a WTRU in a MAC messaging protocol to an application level network management protocol, the MAC messaging protocol being a protocol implemented at a link layer and at a physical layer.

12. The base station of claim 11 wherein the application level network management protocol is simple network management protocol SNMP.

13. The base station of claim 12 wherein an SNMP GET message is received at a base station and the base station is adapted to translate the SNMP GET message to a MAC messaging protocol format and to forward the SNMP GET message to the WTRU.

14. The base station of claim 13 wherein the base station is adapted to receive the MIB of a WTRU from said WTRU in the MAC messaging protocol format and the base station is adapted to translate the MIB to SNMP and to send the translated MIB to the system controller.

15. The base station of claim 12 wherein the base station is configured to periodically obtain the MIB of WTRUs associated with the base station and store them in memory.

16. The base station of claim 15 wherein the MIBs are stored in the base station in translated format and the base station is configured to respond to SNMP GET messages by selecting the appropriate MIB stored in memory and sending it to the system controller.

17. The base station of claim 16 wherein the base station is configured to request MIBs from WTRUs whose MIBs have been stored in the base station's memory more than a predetermined amount of time.

18. The base station of claim 12 wherein the SNMP message is translated by the base station and sent to the at least one WTRU.

19. The base station of claim 12 wherein the SNMP message is sent to an SNMP agent in the WTRU.

20. The base station of claim 11 wherein the application level network management protocol is extended markup language XML.

## Patentansprüche

1. Verfahren zum Kommunizieren von Informationen zwischen Netzwerkfunktionseinheiten in einem drahtlosen Kommunikationssystem, das eine Basisstation, eine Systemsteuerung und eine drahtlose Sende-/Empfangseinheit WTRUS aufweist, wobei das Verfahren aufweist:
unter Verwendung eines Anwendungsebenen-Netzverwaltungsprotokolls Empfangen von Netzverwaltungsinformationen von der Systemsteuerung au der Basisstation;
**gekennzeichnet durch**:
Umsetzen der Netzverwaltungsinformationen von dem Anwendungsebenen-Netzverwaltungsprotokoll auf ein Medienzugriffssteuerungs-, MAC-, Datentransferprotokoll an der Basisstation, wobei das MAC-Datentransferprotokoll ein Protokoll ist, das auf einer Verbindungsschicht und auf einer physikalischen Schicht implementiert ist,
Übertragen der Netzverwaltungsinformationen zwischen der Basisstation und der WTRU unter Verwendung des MAC-Datentransferprotokolls.

2. Verfahren nach Anspruch 1, wobei das Anwendungsebenen-Netzverwaltungsprotokoll ein einfaches Netzverwaltungsprotokoll SNMP ist.

3. Verfahren nach Anspruch 2, wobei die Systemsteuerung eine SNMP-GET-Nachricht ausgibt, um Netzverwaltungsinformationen von einer WTRU zu erhalten.

4. Verfahren nach Anspruch 3, wobei die Basisstation der Systemsteuerung antwortet, nachdem sie die angeforderten Netzverwaltungsinformationen von einer Datenbank in der Basisstation abgerufen hat, wobei die Netzverwaltungsinformationen für die WTRU gespeichert werden, nachdem sie durch die Basisstation unter Verwendung eines MAC-Datentransferprotokolls von der WTRU erhalten wurden.

5. Verfahren nach Anspruch 4, wobei das MAC-Datentransferprotokoll 802.11k ist.

6. Verfahren nach Anspruch 2, wobei die Systemsteuerung eine SNMP-TRAP-Nachricht ausgibt, um wenigstens einen Parameter der WTRU festzulegen.

7. Verfahren nach Anspruch 6, wobei die Basisstation die SNMP-TRAP-Nachricht in eine 802.11k-Nachricht umsetzt und die umgesetzte Nachricht an die WTRU überträgt.

8. Verfahren nach Anspruch 2, das ferner das Übertragen einer SNMP-Nachricht von der Systemsteuerung an einen SNMP-Agenten in der WTRU aufweist, um wenigstens einen Parameter in der WTRU festzulegen.

9. Verfahren nach Anspruch 8, wobei die WTRU basierend auf der Nachricht konfiguriert wird, um den wenigstens einen Parameter automatisch auf einen vorgegebenen Wert festzulegen, wenn ein vorgegebenes Ereignis auftritt.

10. Verfahren nach Anspruch 1, wobei das Anwendungsebenen-Netzverwaltungsprotokoll die erweiterte Auszeichnungssprache XML ist.

11. Basisstation (204) in einem drahtlosen Kommunikationssystem, die geeignet ist, Netzwerkinformationen zwischen einer Systemsteuerung (206) und einer drahtlosen Sende-/Empfangseinheit WTRU (202) zu übertragen, wobei die Basisstation aufweist:
eine Datenbank (210), die konfiguriert ist, um Netzverwaltungsinformationen zu speichern,
wobei die Basisstation **dadurch gekennzeichnet ist, dass** sie ferner aufweist:
einen Umsetzer (208), der konfiguriert ist, um von der Systemsteuerung in einem Anwendungsebenen-Netzverwaltungsprotokoll empfangene Netzverwaltungsinformationen auf ein Medienzugriffssteuerungs-, MAC-, Datentransferprotokoll umzusetzen, und von einer WTRU in einem MAC-Datentransferprotokoll empfangene Netzverwaltungsinformationen auf ein Anwendungsebenen-Netzverwaltungsprotokoll umzusetzen, wobei das MAC-Datentransferprotokoll ein Protokoll ist, das auf einer Verbindungsschicht und auf einer physikalischen Schicht implementiert ist.

12. Basisstation nach Anspruch 11, wobei das Anwendungsebenen-Netzverwaltungsprotokoll ein einfaches Netzverwaltungsprotokoll SNMP ist.

13. Basisstation nach Anspruch 12, wobei eine SNMP-GET-Nachricht an einer Basisstation empfangen wird und die Basisstation geeignet ist, die SNMP-GET-Nachricht auf ein MAC-Datentransferprotokollformat umzusetzen und die SNMP-GET-Nachricht an die WTRU weiterzuleiten.

14. Basisstation nach Anspruch 13, wobei die Basisstation geeignet ist, die MIB einer WTRU von der WTRU in dem MAC-Datentransferprotokollformat zu empfangen, und die Basisstation geeignet ist, die MIB auf SNMP umzusetzen und die umgesetzte MIB an die Systemsteuerung zu senden.

15. Basisstation nach Anspruch 12, wobei die Basisstation konfiguriert ist, um die MIB der mit der Basisstation verbundenen WTRU regelmäßig zu erhalten und sie im Speicher zu speichern.

16. Basisstation nach Anspruch 15, wobei die MIBs in der Basisstation in dem umgesetzten Format gespeichert werden und die Basisstation konfiguriert ist, um auf SNMP-GET-Nachrichten durch Auswählen der passenden im Speicher gespeicherten MIB und Senden dieser an die Systemsteuerung zu antworten.

17. Basisstation nach Anspruch 16, wobei die Basisstation konfiguriert ist, um MIBs von WTRUS anzufordern, deren MIBs länger als einen vorgegebenen Zeitbetrag in dem Speicher der Basisstation gespeichert wurden.

18. Basisstation nach Anspruch 12, wobei die SNMP-Nachricht von der Basisstation umgesetzt wird und an die wenigstens eine WTRU gesendet wird.

19. Basisstation nach Anspruch 12, wobei die SNMP-Nachricht an einen SNMP-Agenten in der WTRU gesendet wird.

20. Basisstation nach Anspruch 11, wobei das Anwendungsebenen-Netzverwaltungsprotokoll die erweiterte Auszeichnungssprache XML ist.

## Revendications

1. Procédé pour communiquer des informations entre des entités de réseau dans un système de communication sans fil comprenant une station de base, un contrôleur de système, et une unité d'émission / réception sans fil WTRU, le procédé comprenant :
la réception, au niveau de la station de base, d'informations de gestion de réseau en provenance du contrôleur de système en utilisant un protocole de gestion de réseau de niveau application ;
**caractérisé par** :
la traduction, au niveau de la station de base, des informations de gestion de réseau du protocole de gestion de réseau de niveau application en un protocole de messagerie de contrôle d'accès au support MAC, le protocole de messagerie MAC étant un protocole mis en oeuvre au niveau d'une couche liaison et d'une couche physique,
la transmission des informations de gestion de réseau entre la station de base et la WTRU en utilisant le protocole de messagerie MAC.

2. Procédé selon la revendication 1, dans lequel le protocole de gestion de réseau de niveau application est un protocole simple de gestion de réseau SNMP.

3. Procédé selon la revendication 2, dans lequel le contrôleur de système émet un message SNMP Get pour obtenir des informations de gestion de réseau à partir d'une WTRU.

4. Procédé selon la revendication 3, dans lequel la station de base répond au contrôleur de système après avoir extrait les informations de gestion de réseau demandées d'une base de données dans la station de base où des informations de gestion de réseau pour la WTRU sont stockées après avoir été obtenues par la station de base à partir de la WTRU en utilisant un protocole de messagerie MAC.

5. Procédé selon la revendication 4, dans lequel le protocole de messagerie MAC est 802.11k.

6. Procédé selon la revendication 2, dans lequel le contrôleur de système émet un message SNMP Trap pour établir au moins un paramètre de la WTRU.

7. Procédé selon la revendication 6, dans lequel la station de base traduit le message SNMP TRAP en un message 802.11k et transmet le message traduit à la WTRU.

8. Procédé selon la revendication 2, comprenant en outre la transmission d'un message SNMP du contrôleur de système à un agent SNMP dans la WTRU pour établir au moins un paramètre dans la WTRU.

9. Procédé selon la revendication 8, dans lequel sur la base du message, la WTRU est configurée pour établir automatiquement le au moins un paramètre à une valeur prédéterminée lorsqu'un événement prédéterminé se produit.

10. Procédé selon la revendication 1, dans lequel le protocole de gestion de réseau de niveau application est le langage de balisage étendu XML.

11. Station de base (204) dans un réseau de communication sans fil adaptée pour transmettre des informations de gestion de réseau entre un contrôleur de système (206) et une unité d'émission / réception sans fil WTRU (202), ladite station de base comprenant :
une base de données (210) configurée pour stocker des informations de gestion de réseau,
ladite station de base étant **caractérisée en ce qu'**elle comprend en outre :
un traducteur (208) configuré pour traduire des informations de gestion de réseau reçues du contrôleur de système dans un protocole de gestion de réseau de niveau application en un protocole de messagerie de contrôle d'accès au support MAC, et pour traduire des informations de gestion de réseau reçues d'une WTRU dans un protocole de messagerie MAC en un protocole de gestion de réseau de niveau application, le protocole de messagerie MAC étant un protocole mis en oeuvre au niveau d'une couche liaison et d'une couche physique.

12. Station de base selon la revendication 11, dans laquelle le protocole de gestion de réseau de niveau application est un protocole simple de gestion de réseau SNMP.

13. Station de base selon la revendication 12, dans laquelle un message SNMP GET est reçu au niveau d'une station de base et la station de base est adaptée pour traduire le message SNMP GET en un format de protocole de messagerie MAC et pour transférer le message SNMP GET à la WTRU.

14. Station de base selon la revendication 13, dans laquelle la station de base est adaptée pour recevoir la MIB d'une WTRU en provenance de ladite WTRU au format de protocole de messagerie MAC et la station de base est adaptée pour traduire la MIB en SNMP et pour envoyer la MIB traduite au contrôleur de système.

15. Station de base selon la revendication 12, dans laquelle la station de base est configurée pour obtenir périodiquement la MIB de WTRU associées à la station de base et les stocker en mémoire.

16. Station de base selon la revendication 15, dans laquelle les MIB sont stockées dans la station de base au format traduit et la station de base est configurée pour répondre aux messages SNMP GET en sélectionnant la MIB appropriée stockée en mémoire et en l'envoyant au contrôleur de système.

17. Station de base selon la revendication 16, dans laquelle la station de base est configurée pour demander des MIB aux WTRU dont les MIB ont été stockées dans la mémoire de la station de base plus d'une quantité de temps prédéterminée.

18. Station de base selon la revendication 12, dans laquelle le message SNMP est traduit par la station de base et envoyé à la au moins une WTRU.

19. Station de base selon la revendication 12, dans laquelle le message SNMP est envoyé à un agent SNMP dans la WTRU.

20. Station de base selon la revendication 11, dans laquelle le protocole de gestion de réseau de niveau application est le langage de balisage étendu XML.
